# EUROPEAN PATENT APPLICATION

(11) **EP 1 076 455 A2**
(43) Date of publication of application: **14.02.2001**
(21) Application number: 00500178.9
(22) Date of filing: 04.08.2000
(51) Int. Cl.: H04N 7/12, H04N 7/14

(54) **Real-time device applicable to the capture and transmission of video sequences through data networks of low bandwidth**

(30) Priority: 09.08.1999 ES 9901826
(71) Applicant: Telefonica, S.A., 28013 Madrid (ES)
(72) Inventor: Garcia Ferreras, Antonio, E-28020 Madrid (ES); Munoz Lopez, Joaquin Ma., E-28020 Madrid (ES); Hernandez-Gil, Jose F., E-28020 Madrid (ES)
(74) Representative: Sanchez del Campo Gonzalez de Ubierna, Ramon

(57) **Abstract**

Real-time device applicable to the capture and transmission of video sequences through data networks of low bandwidth (1) constituted starting from a digital chamber or video image acquisition device (5), a microprocessor fitted with associated peripheral elements and a transmitter in which, in the microprocessor, video acquisition devices (6), an image process and compression device (7), and a communication device (8), controlled by a control module (9) are articulated, jointly analysing, coding and compresing the image, and preparing the video signal to be transmitted through the data network (2), in order to acquire an adequete size to enable them to be transmitted over data networks of low capacity (2) with an adequate quality, being grouped in only one portable volume and having a battery (4) allowing it to be self-contained from the conventional electricity feed network, being capable of associating with a cellular telephone through an access device to the data network (10).

## Description

### BACKGROUND OF THE INVENTION

The present specification refers to an application for a Patent of Invention related to a real-time device applicable to the capture and transmission of video sequences through data networks of low bandwidth, the evident utility of which is to be configured as a device capable of digitally processing conventional video signals and codify them to be transmitted through networks of low bandwidth of the type of those habitually used for GSM telephony and similar.

The invention offers an integrated solution for capturing and transmitting video from remote locations - through environs hardly suitable for transmitting data or presenting feeds scarcely stable.

### FIELD OF THE INVENTION

This invention will find application to the industry dedicated to the manufacture of elements, devices and electronic systems for data transmission; more - specifically, applicable to the transmission of conventional video data.

### RELATED ART

The applicant is aware of the existence of electronic devices applicable to the data transmission thru telephonic networks, relying on microprocessors'or making use of them, which, by means of a suitable computer program, are capable of coding signals in an adequate way, and module them both digitally, and analoginally.

Specifically, he knows devices that, associated to a computer, are capable of coding video image and transmitting them over a conventional telephonic network to be captured and reproduced in remote devices also connected to the telephone network.

Some of. the above mentioned devices are capable of capturing and transmitting real-time video signals, the most known antecedents being the associated devices to a personal computer that, via Internet, can capture, process and transmit images taken by a conventional chamber, also associated to the computer, allo- , wing for example to maintain videoconferences through said network.

Nevertheless, the conventional telephonic networks used. by the above mentionel devices must have an adequate bandwidth so that transmissions can be performed at a necessary rate, and to rely on a good continuity in order to avoid interruptions at the transmission.

On the other hand, the devices known by the applicant are a part of a computer system that, optionally, incorporates image captured cards, transmitters and encoders, transmission modems and a plurality of associated electronic devices.

In view of the existing devices, at present, it would be desirable to rely on real-time image capture and transmission devices integrating in only one body all the constitutive elements, configuring it as a self-contained body, allowing, also, telephony networks of low bandwidth of the type of those used for GSM cellular telephony to be used.

The applicant is not aware of the existence at present of any device of this type presenting the characteristics above pointed out as desirable.

### SUMMARY OF THE INVENTION

The real-time device applicable to the capture and transmission of video sequences through data networks of low bandwidth as proposed by the invention, constitutes an evident novelty in the field of its application, presenting all the advantages pointed out above as desirable, for a device of this type.

Specifically, the invention is constituted starting from a digital chamber, a computer module, and a transmitting unit.

The computer module, based on a microprocessor, has electronic devices for the video capture, image coding and compression and processing devices, and a communication module, ruled by a control device.

The described devices are integrated in only one self-contained and portable apparatus, integrating in it, all the protocols, methods and process necessary for a real-time video coding and transmission.

The image processing, coding and compressing devices permit a prior and complete coding before performing a search of motion, speeding up the sequence coding and selecting a block generated with a minimum of information to be transmitted.

The communication module, especially designed to transmit through networks of reduced bandwidth, optimizes the information to be transmitted according to the number of bits necessaries for transmitting each motion vector, provided by the image processing, coding and compressing devices.

Optionally, the invention incorporates a receiving device, or receiver, especially developed to act jointly with the above mentioned device, and allowing the signal to be incorporated to the computer systems in which it is embodied.

### DESCRIPTION OF DRAWINGS

In order to complement this description and aid to a better understanding of the characteristics of the invention, the appending drawings, which are a part of this specification, show, by way of illustrative and non-limiting example, the following:

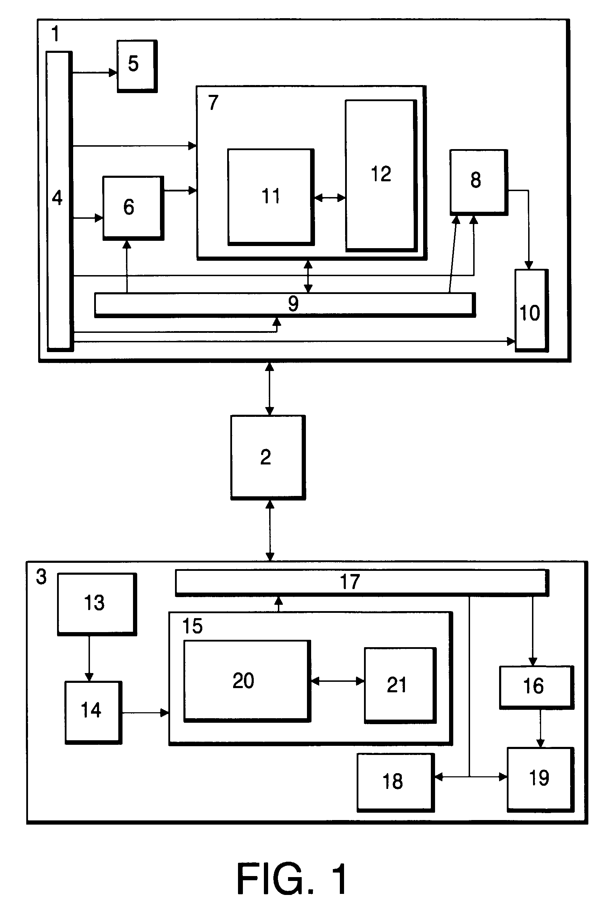

Figure 1 shows a block diagram of the invention, whwrein the different devices composing it and the data communication lines interconnecting it are shown.

### PREFERRED EMBODIMENT OF THE INVENTION

In view of the figures, it can be seen that the real-time device applicable to the capture and transmission of video sequences through data networks of low bandwidth (1) of the invention, is constituted starting from a digital chamber or video image acquisition device (5), a microprocessor fitted with associated peripheral elements, and a transmitter in which, in the microprocessor, video acquisition devices (6), an image processing and compressing device (7), and a communications device (8) are articulated, ruled by a control module (9), jointly analyzing, coding, and compressing the image and preparing the signal of video to be transmitted through the data network (2), so that it acquires an adequate size to be easily transmitted through data networks of low capacity (2), with a suitable quality, being grouped in only one portable volume and having a battery (4) allowing it to be self-contained from the conventional electricity feed network, being capable of associating with a cellular telephone through an access device to the data network (10).

The image processing (7) has a processor with real-time coding (11), performing a prior and complete coding before carrying out a search de motion, speeding up the sequence coding and selecting a block having a minimum of information to be transmitted, including also a bandwidth coding device (12), optimizing the necessary information to be transmitted according to the number of bits of the telephone line each motion vector.

Optionally, the real-time device applicable to the capture and transmission of video sequences through data networks of low bandwidthe (1) presents a receiver (3), constituted starting from an access device to the data network (13), which, by means of a communication device (14), transmits the signal to a de-compressing device (15) and decoder (14) of the signal of video to decoding elements for the bandwidth (20), and real-time decoders (21) generating a signal which can be visualized on a monitor (19) or being stored in the adequate massive data storage (18), the whole being controlled by a control device (17), the operation of which is based on a microprocessor.

It is not necessary to extend this description for any expert in the art to understand the scope of the invention and the advantages derived from it.

The materials, shape, size and arrangement of its components will be open to variation, provided that it does not imply any alteration to the essence of the invention.

The terms under which this specification has been described should be always taken in an ample and non-limitative sense.

## Claims

1. A real-time device applicable to the capture and transmission of video sequences through data networks of low bandwidth (1), characterized in that it is constituted starting from a digital chamber or video image acquisition device (5), a microprocessor fitted with associated peripheral elements, and a transmitter in which, in the microprocessor, video acquisition devices (6), an image processing and compressing device (7) and a communication device (8) are articulated, controlled by a control module (9), jointly analysing, coding, compressing the image and preparing the video signal to be transmitted through the data network (2), in order to acquire an adequate size to easily transmit it by data networks of low capacity (2) and having a suitable quality, being grouped in only one portable volume and having a battery (4) allowing it to be self-contained from the conventional network of electricity feeding, being capable of associating with a cellular telephone through the access device to the data network (10).

2. A real-time device applicable to the capture and transmission of video sequences through data networks of low bandwidth (1), according to claim 1, characterized in that the image processing module (7) has a processor with real-time coding (11), performing a prior and complete coding before carrying out the motion search, speeding up the sequences coding and selecting a block having a minimum of information to be transmitted, including also a bandwidth coding device (12) optimizing the necessary information for transmitting according to the number of bits of the telephone line each motion vector.

3. A real-time device applicable to the capture and transmission of video sequences through data networks of low bandwidth (1), according to claims 1 and 2, characterized in that, optionally, the real-time device applicable to the capture and transmission of video sequences through data networks of low bandwidth (1) presents a receiver (3), constituted starting from an access device to the data network (13), which, by means of a communication device (14), transmits the signal to a decompressing (15) and decoding (14) device of the video signal to decoding elements for the bandwidth (20) and real-time decoders (21), generating a signal which can be visualized on a monitor (19) or being stored in adequate devices of massive data storage (18), the assembly being controlled by a control device (17), the operation of which is based on a microprocessor.
